Europäisches Patentamt

European Patent Office

Office européen des brevets

(19)

(11) Veröffentlichungsnummer: **0 065 273**
A2

(12) ## EUROPÄISCHE PATENTANMELDUNG

(21) Anmeldenummer: **82104135.7**

(22) Anmeldetag: **12.05.82**

(51) Int. Cl.³: **G 06 F 3/04**

(30) Priorität: **15.05.81 DE 3119458**

(43) Veröffentlichungstag der Anmeldung: **24.11.82**
**Patentblatt 82/47**

(84) Benannte Vertragsstaaten: **FR GB IT NL**

(71) Anmelder: **SIEMENS AKTIENGESELLSCHAFT Berlin und München, Postfach 22 02 61, D-8000 München 22 (DE)**

(72) Erfinder: **Schürlein, Bernhard, Dr., In der Ruhstatt 19, D-6252 Diez (DE)**

(54) **Mehrrechnersystem.**

(57) Die Erfindung betrifft ein Mehrrechnersystem, dessen Systemkomponenten durch ein Bussystem aus Informationsleitungen und Steuerleitungen miteinander verknüpft sind. Um eine schnelle Fehlererkennung und eine einfache Fehlertoleranz zu ermöglichen, wird die Anzahl der mindestens erforderlichen Steuerleitungen um ein Mehrfaches erhöht. Zur Sicherung der auf den Informationsleitungen übertragenen Daten ist eine Vorwärtsfehlerkorrektur vorgesehen.

SIEMENS AKTIENGESELLSCHAFT     Unser Zeichen
Berlin und München              VPA 81 P 8022 E.

0065273

Mehrrechnersystem

Die Erfindung bezieht sich auf ein Mehrrechnersystem, insbesondere mit mehreren Mikrorechnern, deren Systemkomponenten durch ein Informationsleitungen und Steuerleitungen umfassendes Busleitungssystem (Kommunikationsbus) miteinander verknüpft sind und mit einer an das Busleitungssystem angeschlossenen zentralen oder dezentralen Steuereinrichtung.

Mehrrechnersystemen auf der Basis von Mikrorechnern steht die Verwendung in einer großen Vielfalt von Einsatzspektren offen. Die Vorteile derartiger Strukturen sind die funktionelle Aufteilung von Hardware und Software und die Erweiterbarkeit. Durch Verbesserung der Hardware kann der Software-Anteil bei den Übertragungsprozeduren verringert und die Übertragungsrate erhöht werden.

Der Aufbau eines Mehrrrechnersystems wird wesentlich durch das Kommunkationssystem bestimmt, das die einzelnen Rechner untereinander verbindet und den Datenaustausch zwischen diesen ermöglicht. Ein großer Teil der Rechnersysteme verwendet Bus-Systeme unterschiedlicher Ausbildung und Leistungsfähigkeit. Das sogenannte Uni-Bus-System arbeitet mit einer gemeinsamen Sammelschiene zwischen den Rechnern, über die die gesamte Kommunikation erfolgt. Dem Vorteil des geringen Aufwandes und der einfachen Erweiterbarkeit dieses Bus-Systems steht der begrenzte Durchsatz und der totale Ausfall bei Auftreten eines Fehlers in der Bus-

Ha 1 Mai / 08.05.81

0065273

Steuerung entgegen. Derartige Mehrrechnersysteme mit zugehörigem Bus-System sind bekannt (Electronic 1979, Ein Multi-Mikrocomputersystem am Arbeitsplatz, 1. Teil, Heft 19, Seiten 87 bis 90, 2. Teil, Heft 20, Seiten 73 bis 77).

Der Erfindung liegt die Aufgabe zugrunde, ein kostengünstiges Mehrrechnersystem der eingangs genannten Art anzugeben, das eine schnelle Fehlererkennung und eine einfache Fehlertoleranz in der Verbindungsstruktur ermöglicht. Das Mehrrechnersystem soll gleichzeitig leicht erweiterbar sein. Gemäß der Erfindung wird diese Aufgabe dadurch gelöst, daß die gegenüber der Anzahl der Informationsleitungen geringere Anzahl der mindestens erforderlichen Anzahl der Steuerleitungen um ein ganzzahliges Vielfaches erhöht ist und daß zur Sicherung der auf den Informationsleitungen übertragenen Daten Schaltungsmittel (Maßnahmen) für eine Vorwärtsfehlerkorrektur vorgesehen sind.

Durch die gleichzeitige Verwendung von redundanten Steuerleitungen und von Schaltungsmitteln für eine Vorwärtsfehlerkorrektur im Busleitungssystem ergibt sich eine erhöhte Ausfallsicherheit des Mehrrechnersystems.

Gemäß einer vorteilhaften Ausgestaltung der Erfindung erfolgt die Buszuteilung durch eine zentrale Steuereinrichtung derart, daß eine unbegrenzte Reservierung des Kommunikationsbus durch einen Teilnehmer unterbunden ist.

Wegen der zusätzlichen Verwendung einer größeren Anzahl redundanter Leitungen im Kommunikationsbus und der Erhöhung des damit verbundenen Aufwandes für Sende-und Empfangsschaltungen in Verbindung mit einer Fehlerkorrekturlogik ist es vorteilhaft gemäß einer weiteren Ausgestaltung der Erfindung Adressen, Daten, Anforderungen und Steuerinformationen in einem festen Zeitraster im Zeitmultiplexverfahren über dieselben Informationsleitungen des Kommunikationsbus zu übertragen.

Die Erfindung und weitere Einzelheiten der Erfindung werden anhand der Figuren 1 bis 4 näher erläutert.

Es zeigen
Fig. 1 ein Prinzipschaltbild eines Mehrrechnersystems gemäß der Erfindung,
Fig. 2 den Inhalt der Informationsleitungen während der einzelnen Bus-Phasen,
Fig. 3 und 4 eine Darstellung einer Vierphastensteuerung unter Verwendung von zwei oder mehr Steuerleitungen.

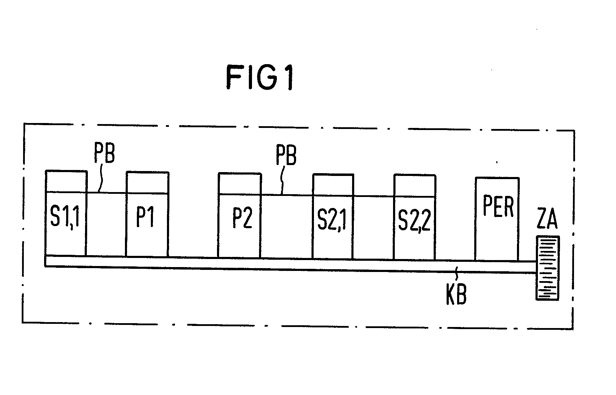

Das Mehrrechnersystem (Fig. 1) besteht aus einer Anzahl von zum Beispiel zwei bis sechzehn Rechnern P1, P2 und eine Anzahl von weiteren Systemkomponenten, z.B. Speichern S1.1, S2.1, Peripheriegeräten PER. Die Verknüpfung der einzelnen Systemkomponenten, wie Rechner, Speicher und Peripheriegeräte erfolgt durch einen Systembus, der aus einem Kommunikationsbus KB und einer oder mehreren privaten Busleitungen PB gebildet wird. Über Busanpassungen sind die Rechner und gegebenenfalls Speicher mit dem Kommunikationsbus KB verbunden. Darüber wird eine direkte Kommunikation zwischen den Rechnern, z.B. P1 mit P2, ein Informationsaustausch über am Kommunikationsbus angeschlossene Speicher, z.B. S1.1, sowie der Zugriff auf gemeinsam benutzte Peripheriegeräte PER ermöglicht.

Die Benutzung des Kommunikationsbus KB durch mehrere gleichgestellte Rechner erfordert eine Regelung der Buszugriffe. Sie erfolgt durch eine zentrale Schaltung, den Arbiter ZA, der die Übertragung auf den Kommunikationsbus in einem festen Zeitraster steuert. In der Verbindungsstruktur, die diesen Systembus bildet, ist eine Redundanz vorgesehen, damit im Anwendungssystem nicht nur spezielle Teilausfälle überbrückt werden können.

Dabei ist davon ausgegangen, daß die Anzahl der wenigstens erforderlichen Steuerleitungen im Busleitungssystem wesentlich kleiner ist als die Anzahl der Informationsleitungen. Um eine ausreichend große Redundanz zu erhalten, wird die Anzahl der Steuerleitungen vervielfacht, z.B. verdreifacht. Gleichzeitig sind für die Informationsleitungen Maßnahmen zur Datensicherung vorgesehen, derart, daß mittels redundanter Codes Fehlererkennung und Fehlerkorrektur durchgeführt werden können.

Die Bus-Zugriffssteuerung durch die zentrale Steuerschaltung erfolgt gemäß einer Weiterbildung der Erfindung mittels einer codierten Vierphasensteuerung unter Verwendung von wenigstens zwei Steuerleitungen derart, daß sich von Phase zu Phase jeweils genau ein Leitungszustand ändert. Die Funktionen, die über den Kommunikationsbus UB ausgeführt werden sollen, z.B. Lesen, Schreiben, Übertragen werden durch vier Übertragungsphasen bestimmt, die nachfolgend näher definiert werden:

1. Anforderungsphase (REQ)
In dieser Phase werden die Informationsleitungen als Anforderungsleitungen benutzt. Jeder Rechner meldet sich beim Arbiter auf einer fest zugeordneten Leitung und auf einer Sammelleitung. Durch die Verwendung einer zusätzlichen Sammelleitung geht bei Ausfall einer Leitung keine Anforderung verloren.

2. Zugriffserlaubnis (GR)

Der Arbiter wählt über die Informationsleitungen in codierter Form den nächsten Busbenutzer (SENDER) aus. Steht wegen eines Leitungsausfalles nur eine Sammelanforderung auf der Sammelleitung an, so wird durch sukzessive Buszuteilung festgestellt, welche Einheit den Bus anfordert.

3. Funktion und Zielangabe (FCT)

Die durch Zugriffserlaubnis angewählte Einheit liefert über die Informationsleitungen eine gewünschte Funktion und die Zielangabe, z.B. Speicheradresse, Rechnernummer oder Peripheriesteuerung (EMPFÄNGER).

4. Daten (DAT)

Die Daten werden von der in der Übertragungsphase 3 (FCT) ausgewählten Zieleinheit übernommen.

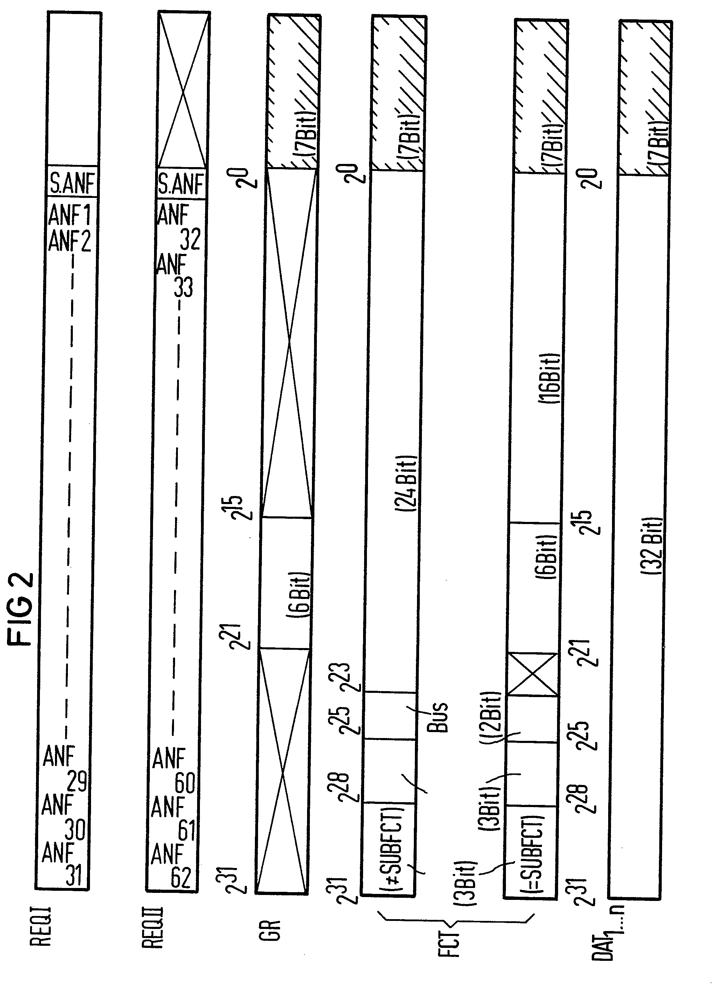

Die Verwendung der Informationsleitungen während der durch die Steuerleitungen bestimmbaren einzelnzen Bus-Phasen ist beispielsweise in der Fig. 2 aufgezeigt.

Es bedeuten:

| | |
|---|---|
| ANFI bis ANF 62 | Bus-Anforderungen von bis zu 62 Teilnehmern |
| S.ANF | Sammelanforderung |
| QUITTUNG | Übernahmebestätigung bzw. Fehleranzeige für den vorangegangenen BUS-Zyklus (ausgewertet durch Majoritätslogik) |

-6-    VPA 81 P 8022 E

SENDERADRESSE        Kennung des Teilnehmers, der Funktion und Daten für die folgenden
BUS-Phasen liefern soll (erzeugt
vom Arbiter auf Grund der Anforderungen).

FUNKTION        NOP, READ, WRITE, RESPONSE, TST.
MOD jeweils mit 24 Bit Adresse
oder
IRPT mit Angabe einer SUBFUNKTION
(d.h. spezielle Meldung, z.B. Anstoß eines Selbsttests) und einer
Teilnehmeradresse

EMPFÄNGERADRESSE        Kennung des Teilnehmers, der vom
SENDER angesprochen wird.

ANZAHL DAT.ZYKL.        Anzahl der DAT-Zyklen, die der FCT-
Phase folgen werden. Für alle
Funktionen außer READ.

Bei READ folgt keine (oder eine leere DAT-Phase), die angegebene Zahl
gibt die in RESPONSE erwartete Anzahl
von DAT-Phasen an.

BUSFORMAT        gibt an, ob 8-, 16- oder 32-Bit
daten in jeder der folgenden DAT-
Phasen anliegen.

Die zweite Anforderungsphase REQII wird nur bei Bedarf
vom Arbiter ZA eingeschaltet.

Die Fehlererkennung auf den Informationsleitungen erfolgt (außer in der REX-Phase) mit Hilfe fehlerkorrigierender Codes. Die Steuerleitungen werden durch eine
Majoritätslogik (Mehrheitsentscheid) ausgewertet.

Wird in der REQ-Phase festgestellt, daß nur die Sammelanforderung gesetzt ist, so liegt ein Fehler vor. Es kann z.B. eine Anforderungsleitung unterbrochen sein. In diesem Fall wird eine sukzessive Buszuteilung vorgenommen. Dabei wird allen Teilnehmern nacheinander der Bus zugeteilt. Antwortet der zugeteilte Busteilnehmer nicht mit der NOP-Funktion, so ist wahrscheinlich die Anforderungsleitung dieses Teilnehmers unterbrochen. Die entsprechende Teilnehmernummer wird festgehalten, und bei einem erneuten Fehlerfall wird diesem Teilnehmer gleich wieder der Bus zugeteilt. Antwortet er wieder nicht mit der NOP-Funktion, hat sich die Annahme bestätigt, daß bei diesem Teilnehmer bzw. auf seiner Anforderungsleitung ein Fehler vorliegt. Hat der Teilnehmer bei der zweiten Buszuteilung mit der NOP-Funktion geantwortet, so ist beim ersten Zuteilen der Fehlerverdacht wahrscheinlich zu unrecht entstanden, so daß dem nächsten Busteilnehmer der Bus zugeteilt wird.

Es liegt ebenfalls ein Fehler vor, wenn nur eine Anforderung ohne die Sammelanforderung gesetzt ist. Antwortet der dieser Anforderungsleitung zugeordnete Teilnehmer mit der NOP-Funktion, so ist diese Leitung oder einer der zugehörigen Leitungstreiber oder Empfänger defekt. Andernfalls liegt ein Fehler an der Sammelanforderungsleitung vor.

Wesentliche Funktionen, die während der Übertragungsphase 3 (FCT) über die Informationsleitungen des Kommunikationsbus ausgeführt werden, sind in der nachstehenden Tabelle in Verbindung mit einer Erläuterung aufgeführt.

0065273

| Funktion | Erläuterung |
|---|---|
| NULL | keine Funktion, z.B. als Antwort einer Einheit, die vom Arbiter selektiert wurde, obwohl sie keine Anforderung gestellt hat. |
| READ | Lesen von Information von der adressierten Einheit. |
| REPONSE | Rückmeldung dieser Information durch die im READ adressierte Einheit. |
| WRITE | Schreiben von Information zu der adressierten Einheit. |
| TST.MOD | Lesen und (gleichzeitiges Verändern der Information in der adressierten Einheit. |
| IRUPT | Übertragung einer Meldung zwischen Prozessoren. |

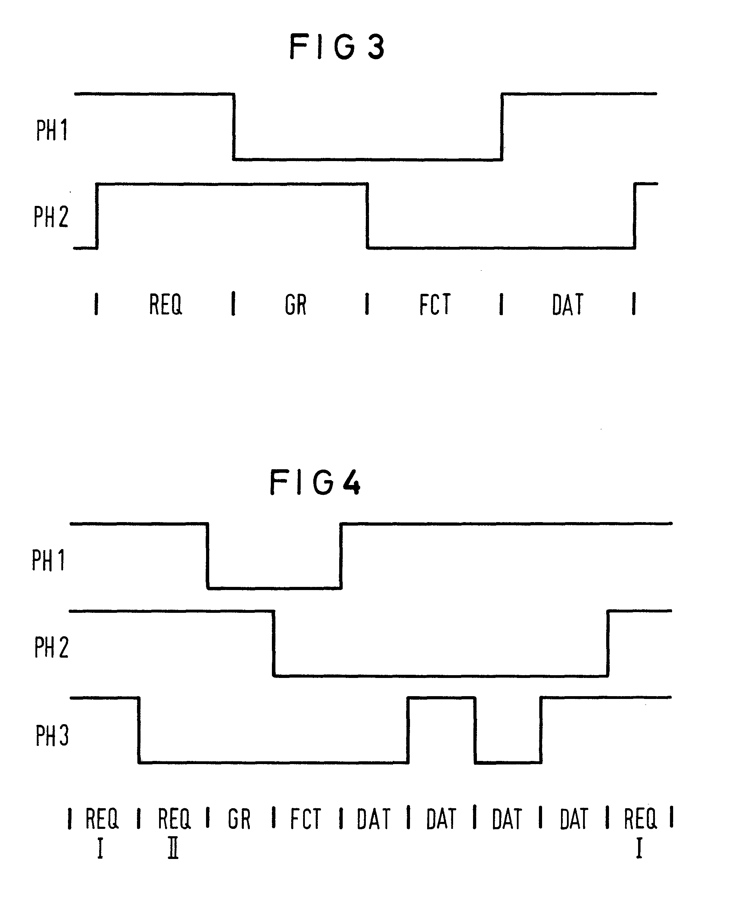

Der eigentlichen Ausführung von Funktionen des Kommunikationsbus über dessen Informationsleitungen, wie z.B. Lesen oder Schreiben, muß die Steuerung der Übertragungsphasen auf den Steuerleitungen des Kommunikationsbus vorausgehen. In einer einfachen Lösung werden zur Steuerung die bereits erläuterten vier Phasen benötigt, z.B. die Anforderungsphase, die Zugriffserlaubnis, die Funktion und Zielangabe und die Datenangabe. Eine einfache Vier-Phasensteuerung unter Verwendung von zwei Leitungen ist in Fig. 3 dargestellt. Durch den jeweiligen Leitungszustand PH1 und PH2 auf den beiden Leitungen sind vier Übetragungsphasen eindeutig unterscheidbar. Die jeweilige Änderung des Leitungszustandes, z.B. von hohem Potential auf Nullpotential oder umgekehrt, dient dabei als Taktsignal. Zwischen einer Änderung des Leitungszustandes, z.B. PH2 und einer darauf folgenden Änderung des Leitungszustandes PH1 liegt eine bestimmte Übertragungsphase, z.B. die mit REQ bezeichnete Anforderungsphase vor. Die übrigen Bezeichnungen GR, FCT, DAT betreffen die übrigen Übertragungsphasen, Zugriffserlaubnis, Funktion und Zielangabe und Datenangabe.

Eine erweiterte Vier-Phasensteuerung, bei der eine Leitungszustandsänderung einer dritten Leitung ausgenutzt wird, ist in Fig. 4 dargestellt. Der Leitungszustand PH3 der dritten Leitung wird nur dann verändert, wenn sich die Leitungszustände PH1 und PH2, welche die Übertragungsphase bestimmen, nicht ändern. Durch diese Erweiterung läßt sich die Leistungsfähigkeit des Bussystems verbessern, ohne daß ein zusätzlicher Takt erforderlich ist. Die Leistungsverbesserungen bestehen unter anderem darin, daß eine mehrstufige Anforderungsabfrage und eine Wiederholung der Anforderungsphase, wenn keine Anforderungen vorliegen, erfolgen kann. Es ist auch eine mehrfache Wiederholung der Datenphase für größere Datenmengen möglich.

3 Patentansprüche
4 Figuren

Patentansprüche

1. Mehrrechnersystem, insbesondere mit mehreren Mikrorechnern, deren Systemkomponenten durch ein Informa-tionsleitungen und Steuerleitungen umfassendes Bus-leitungssystem (Kommunikationsbus) miteinander ver-knüpft sind und mit einer an das Busleitungssystem angeschlossenen Steuereinrichtung, d a d u r c h g e k e n n z e i c h n e t , daß die gegenüber der Anzahl der Informationsleitungen geringere Anzahl der mindestens erforderlichen Anzahl der Steuerleitungen um ein ganzzahliges Vielfaches erhöht ist und daß zur Sicherung der auf den Informationsleitungen übertragenen Daten Schaltungsmittel (Maßnahmen) für eine Vor-wärtsfehlerkorrektur vorgesehen sind.

2. Mehrrechnersystem nach Anspruch 1, d a d u r c h g e k e n n z e i c h n e t , daß die Vervielfachung der Steuerleitungen vorzugsweise auf die dreifache Anzahl der mindestens erforderlichen Steuerleitungen erfolgt.

3. Mehrrechnersystem nach einem der vorhergehenden An-sprüche, d a d u r c h g e k e n n z e i c h -n e t , daß die Datensicherung auf den Informationsleitungen durch Fehlererkennung und Fehlerkorrektur mittels redundanter Codes erfolgt.

FIG 1

## FIG 2

REQ I — ANF 31, ANF 30, ANF 29, ANF ... ANF 2, ANF 1, S.ANF

REQ II — ANF 62, ANF 61, ANF 60, ANF ... ANF 33, ANF 32, S.ANF

GR — $2^{31}$ ... $2^{21}$ (6 Bit) $2^{15}$ ... $2^{0}$ (7 Bit)

FCT —
$2^{31}$ $2^{28}$ $2^{25}$ $2^{23}$ $2^{0}$
($\neq$SUBFCT) / Bus (24 Bit) (7 Bit)

(3Bit) (3Bit) ((2Bit)
(=SUBFCT) (6Bit) (16Bit) (7Bit)
$2^{31}$ $2^{28}$ $2^{25}$ $2^{21}$ $2^{15}$ $2^{0}$

DAT $_{1...n}$ — (32 Bit) (7 Bit)

## FIG 3

PH1

PH2

| | REQ | | GR | | FCT | | DAT | |

## FIG 4

PH1

PH2

PH3

| REQ | | REQ | | GR | | FCT | | DAT | | DAT | | DAT | | DAT | | REQ | |
I       II                                                              I